# EUROPEAN PATENT APPLICATION

(11) **EP 2 765 756 A1**
(43) Date of publication of application: **13.08.2014**
(21) Application number: 12846029.2
(22) Date of filing: 01.11.2012
(51) Int. Cl.: H04L 29/08

(54) **SERVICE CONFIGURATION METHOD AND DEVICE**

(30) Priority: 04.11.2011 CN 201110345963
(71) Applicant: Huawei Technologies Co., Ltd., Shenzhen, Guangdong 518129 (CN)
(72) Inventor: KANG, Jiao, Shenzhen Guangdong 518129 (CN)
(74) Representative: Isarpatent
(86) International application number: PCT/CN2012/083902
(87) International publication number: WO 2013/064080

(57) **Abstract**

The present invention discloses a service configuration method and apparatus, relating to the field of communication network technologies. The method includes: parsing a received service request to obtain a service identifier; determining, according to a mapping relationship between the service identifier and an invoked service or a relationship between the service identifier and an invoked service interface, a target service or a target service interface corresponding to the service identifier; converting a format of the service request into a format of the target service or a format of the target service interface according to a rule of conversion between a service and the invoked service or the invoked service interface; and forwarding the service request in the converted format to the target service or the target service interface. The solutions provided in embodiments of the present invention are applicable to implementing service configuration, and can reduce redundant data in a system and improve system processing performance.

## Description

This application claims priority to Chinese Patent Application No. 201110345963.1, filed with the Chinese Patent Office on November 04, 2011 and entitled "SERVICE CONFIGURATION METHOD AND APPARATUS", which is hereby incorporated by reference in its entirety.

### TECHNICAL FIELD

The present invention relates to the field of communication network technologies, and in particular, to a service configuration method and apparatus.

### BACKGROUND

In the course of transformation from a telecom operator to a comprehensive service provider, a service layer is playing a more and more important role. Many vendors are developing their own network services, and opening their interfaces to the outside so that developers can invoke these interfaces from the outside. Such network services use an Hyper Text Transfer Protocol (HTTP) request of a specific website, and website parameters are provided as parameters to the services. Generally speaking, in the HTTP request, such services transmits data back by means of JavaScript Object Notation (JSON) (a lightweight data interchange format based on a JavaScript language, where JavaScript is program language), Simple object access protocol (SOAP) or an Extensible Markup Language (XML), so that the data is available for being parsed and/or processed by an application program.

In a NGSON (Next Generation Service Overlay Network, Next Generation Service Overlay Network), mass services are managed in a centralized mode. Network service APIs widely applied in the industry may be published on the platform and available for purchase and invocation by visitors. Developers may also use the APIs published in the system to encapsulate network service APIs of different interface types or different functions flexibly according to needs. In the NGSON, a single network service API (Application Program Interface, application program interface) widely applied in the industry is published/registered as a service to provide network services for users or developers. For such APIs, the system assigns a unique service identifier to each published service, and establishes a mapping relationship between a service identifier of each service and a real address. When the service is invoked by a user, the system parses the service request to obtain the service identifier, obtains the real address of the service according to the mapping relationship between the service identifier and the real address, and performs routing and invoking of the service. In addition, when the developers use existing network service APIs in the system to further encapsulate the APIs, the system assigns a unique service identifier to each encapsulated API, and stores a mapping relationship between the encapsulated API and the actually invoked APIs (that is, existing APIs of the system) and interfaces corresponding relationship.

In practical application, the network service provider encapsulates interfaces of different data types or different functions under the same service, thereby facilitating centralized invocation by developers. When the service mapping is implemented in the prior art, multiple interfaces belonging to the same service need to be published and registered as in charge of multiple services, and services need to be published and registered repeatedly. The system needs to store and manage mass static information and dynamic information of the services, which leads to data redundancy and reduces system processing performance.

### SUMMARY

Embodiments of the present invention provide a service configuration method and apparatus, which can reduce redundant data in a system and improve system processing performance.

To achieve the foregoing objectives, the embodiments of the present invention employ the following technical solutions:

A service configuration method includes:
parsing a received service request to obtain a service identifier;
determining, according to a mapping relationship between the service identifier and an invoked service or a relationship between the service identifier and an invoked service interface, a target service or a target service interface corresponding to the service identifier;
converting a format of the service request into a format of the target service or a format of the target service interface according to a rule of conversion between a service and the invoked service or the invoked service interface; and
forwarding the service request in the converted format to the target service or the target service interface.

A service configuration method includes:
parsing a received service interface request to obtain a service interface identifier;
determining, according to a mapping relationship between the service interface identifier and an invoked service or a relationship between the service identifier and an invoked service interface, a target service or a target service interface corresponding to the service interface identifier;
converting a format of the service interface request into a format of the target service or a format of the target service interface according to a rule of conversion between a service interface and the invoked service or the invoked service interface; and
forwarding the service interface request in the converted format to the target service or the target service interface.

A service configuration apparatus includes:
an obtaining unit, adapted to: parse a received service request to obtain a service identifier, and send the service identifier to a determining unit;
the determining unit, adapted to: after receiving the service identifier sent by the obtaining unit, determine, according to a mapping relationship between the service identifier and an invoked service or a relationship between the service identifier and an invoked service interface, a target service or a target service interface corresponding to the service identifier, and send the determined target service or target service interface corresponding to the service identifier to a converting unit;
the converting unit, adapted to: after receiving the target service or target service interface sent by the determining unit, convert a format of the service request into a format of the target service or a format of the target service interface according to a rule of conversion between a service and the invoked service or the invoked service interface, and send the service request in the converted format to a forwarding unit; and
the forwarding unit, adapted to: after receiving the service request in the converted format from the converting unit, forward the service request in the converted format to the target service or the target service interface.

A service configuration apparatus includes:
an obtaining unit, adapted to: parse a received service interface request to obtain a service interface identifier, and send the service interface identifier to a determining unit;
the determining unit, adapted to: after receiving the service interface identifier sent by the obtaining unit, determine, according to a mapping relationship between the service interface identifier and an invoked service or a relationship between the service identifier and an invoked service interface, a target service or a target service interface corresponding to the service interface identifier, and send the determined target service or target service interface corresponding to the service interface identifier to a converting unit;
the converting unit, adapted to: after receiving the target service or target service interface sent by the determining unit, convert a format of the service interface request into a format of the target service interface according to a rule of conversion between a service interface and the invoked service or the invoked service interface, and send the service interface request in the converted format to a forwarding unit; and
the forwarding unit, adapted to: after receiving the service interface request in the converted format from the converting unit, forward the service interface request in the converted format to the target service or the target service interface.

With the service configuration method and apparatus provided in the embodiments of the present invention, a received service request is parsed to obtain a service identifier; a target service or a target service interface is determined according to a mapping relationship between the service identifier and an invoked service or a relationship between the service identifier and an invoked service interface; the service request is converted into a format of the target service or a format of the target service interface according to a rule of conversion between a service and the invoked service or the invoked service interface; and the request in the converted format is forwarded to the target service or the target service interface.

By contrast, in the prior art, a single API acts as a service to provide network services for the user; when multiple services of different interface data types are invoked, the services need to be published and registered repeatedly, and the system needs to store and manage mass static information and dynamic information of the services, which leads to data redundancy and reduces system processing performance. However, in the solutions provided in the embodiments of the present invention, the target service or the target service interface is determined according to the mapping relationship between the service identifier or the service interface identifier and the invoked service or the invoked service interface; and the format of the service request is converted according to the rule of conversion between the service or the service interface and the invoked service or the invoked service interface, thereby reducing the number of times of publishing and registering the services, reducing redundant data in the system, and improving system processing performance.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a service configuration method according to Embodiment 1 of the present invention;
FIG. 2 is a flowchart of another service configuration method according to Embodiment 1 of the present invention;
FIG. 3 is a block diagram of a service configuration apparatus according to Embodiment 1 of the present invention;
FIG. 4 is a flowchart of a service configuration method according to Embodiment 2 of the present invention;
FIG. 5 is a schematic diagram of formats of a service request and a service response provided by Google, a vendor and a developer according to Embodiment 2 of the present invention;
FIG. 6 is a schematic diagram of interface configuration of a service that involves no mapping according to Embodiment 2 of the present invention;
FIG. 7 is a schematic diagram of interface configuration of a service that involves implementation of mapping according to Embodiment 2 of the present invention; and
FIG. 8 is a flowchart of another service configuration method according to Embodiment 2 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

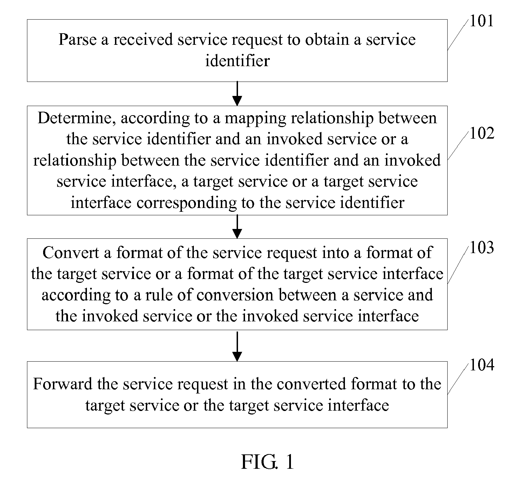

This embodiment of the present invention provides a service configuration method. The service configuration method may be performed by a service router. As shown in FIG. 1, the service configuration method includes:

Step 101: Parse a received service request to obtain a service identifier.

Specifically, a sent service request is received first. The service request includes a service address. The service address is parsed to obtain the service identifier. The service request is sent by a service requester.

Further, the service includes different types of service interfaces, and the service has a unique service identifier in a system. The system here is an application system for configuring and routing the service.

Step 102: Determine, according to a mapping relationship between the service identifier and an invoked service or a relationship between the service identifier and an invoked service interface, a target service or a target service interface corresponding to the service identifier.

Specifically, the manner of determining a target service or a target service interface corresponding to the service identifier may include:
when the request is a service request, determining, according to the service identifier, an activated service interface of a service corresponding to the service identifier; and determining, according to a mapping relationship between the activated service interface and the invoked service or the invoked service interface, the target service or the target service interface corresponding to the service identifier.

Step 103: Convert a format of the service request into a format of the target service or a format of the target service interface according to a rule of conversion between a service and the invoked service or the invoked service interface.

Step 104: Forward the service request in the converted format to the target service or the target service interface.

Further, a request response sent by the target service or the target service interface is received.

The service request response is sent to the service requester; or, the service request response is converted into a format of the invoked service or a format of the invoked service interface according to the rule of conversion between the service and the invoked service or the invoked service interface, and the service request response in the converted format is sent to the service requester. In this way, the user can use a service provided by a network.

With the service configuration method provided in the embodiment of the present invention, a received service request is parsed to obtain a service identifier; a target service or a target service interface is determined according to a mapping relationship between the service identifier and an invoked service or a relationship between the service identifier and an invoked service interface; the service request is converted into a format of the target service or a format of the target service interface according to a rule of conversion between a service and the invoked service or the invoked service interface; and the service request in the converted format is forwarded to the target service or the target service interface.

By contrast, in the prior art, when multiple services of different interface data types are invoked, the services need to be published and registered repeatedly, and the system needs to store and manage mass static information and dynamic information of the services, which leads to data redundancy and reduces system processing performance. However, in the solution provided in the embodiment of the present invention, the target service or the target service interface can be obtained directly according to the mapping relationship between the service identifier and the invoked service or the invoked service interface; and the format of the service request is converted according to the rule of conversion between the service or the service interface and the invoked service or the invoked service interface, thereby reducing the number of times of publishing and registering the services, reducing redundant data in the system, and improving system processing performance.

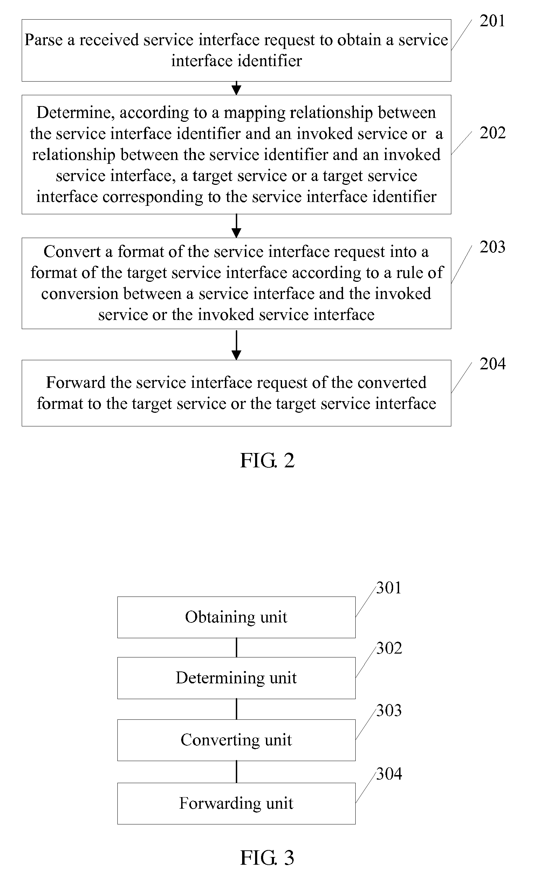

This embodiment of the present invention provides a service configuration method. The service configuration method may be performed by a service router. As shown in FIG. 2, the method includes:

Step 201: Parse a received service interface request to obtain a service interface identifier.

Specifically, a sent service interface request is received first. The request includes a service interface address. The service interface address is parsed to obtain the service interface identifier. The service interface request is sent by a service requester.

Further, the service interface has a unique service interface identifier in a service.

Step 202: Determine, according to a mapping relationship between the service interface identifier and an invoked service or a relationship between the service identifier and an invoked service interface, a target service or a target service interface corresponding to the service interface identifier.

Specifically, the target service or the target service interface corresponding to the service interface identifier is determined according to the service interface identifier and a mapping relationship between a service interface corresponding to the service interface identifier and the invoked service or the invoked service interface.

Further, the target service or the target service interface corresponding to the service interface identifier is determined according to a rule configured for selecting a target service or a target service interface and according to the service interface identifier; or the target service or the target service interface corresponding to the service interface identifier is determined according to an arrangement order and availability of the target service or the target service interface and according to the service interface identifier.

Step 203: Convert a format of the service interface request into a format of the target service interface according to a rule of conversion between a service interface and the invoked service or the invoked service interface.

Step 204: Forward the service interface request in the converted format to the target service or the target service interface.

Further, a service interface request response sent by the target service or the target service interface is received.

The service interface request response is sent to the service requester; or, a format of the service interface request response is converted according to the rule of conversion between the service interface and the invoked service or the invoked service interface, and the service interface request response in the converted format is sent to the service requester.

With the service configuration method provided in the embodiment of the present invention, a received service interface request is parsed to obtain a service interface identifier; a target service or a target service interface corresponding to the service interface identifier is determined according to a mapping relationship between the service interface identifier and an invoked service or a relationship between the service identifier and an invoked service interface; the service interface request is converted into a format of the target service interface according to a rule of conversion between a service interface and the invoked service or the invoked service interface; and the service interface request in the converted format is forwarded to the target service or the target service interface.

By contrast, in the prior art, when multiple services of different interface data types are invoked, the services need to be published and registered repeatedly, and the system needs to store and manage mass static information and dynamic information of the services, which leads to data redundancy and reduces system processing performance. However, in the solution provided in the embodiment of the present invention, the target service or the target service interface can be obtained directly according to the mapping relationship between the service interface identifier and the invoked service or the invoked service interface; and the service interface request is converted into the format of the target service interface according to the rule of conversion between the service interface and the invoked service or the invoked service interface, thereby reducing the number of times of publishing and registering the services, reducing redundant data in the system, and improving system processing performance.

This embodiment of the present invention provides a service configuration apparatus. The apparatus may be a service router. As shown in FIG. 3, the apparatus includes an obtaining unit 301, a determining unit 302, a converting unit 303, and a forwarding unit 304.

The obtaining unit 301 is adapted to: parse a received service request to obtain a service identifier, and send the obtained service identifier to the determining unit 302.

Specifically, the obtaining unit 301 is adapted to: receive a sent service request, obtain a service address included in the service request, parse the service address to obtain the service identifier, and send the obtained service identifier to the determining unit 302. The determining unit 302 is adapted to: determine, according to a mapping relationship between the service identifier and an invoked service or a relationship between the service identifier and an invoked service interface, a target service or a target service interface corresponding to the service identifier, and send the determined target service or target service interface corresponding to the service identifier to the converting unit 303.

Specifically, the determining unit 302 is adapted to: determine an activated service interface of a service corresponding to the service identifier; and determine, according to a mapping relationship between the activated service interface and the invoked service or the invoked service interface, the target service or the target service interface corresponding to the service interface. Further, the determining unit 302 is further adapted to: determine, according to a rule configured for selecting a target service or a target service interface and according to the service identifier, the target service or the target service interface corresponding to the service identifier, and send the determined target service or target service interface corresponding to the service identifier to the converting unit 303; or, the determining unit 302 is adapted to: determine, according to an arrangement order and availability of the target service or the target service interface and according to the service identifier, the target service or the target service interface corresponding to the service identifier, and send the determined target service or target service interface corresponding to the service identifier to the converting unit 303.

The converting unit 303 is adapted to: after receiving the determined target service or target service interface sent by the determining unit 302 and corresponding to the service identifier, convert a format of the service request into a format of the target service or a format of the target service interface according to a rule of conversion between a service and the invoked service or the invoked service interface, and send the service request in the converted format to a forwarding unit 304.

The forwarding unit 304 is adapted to: after receiving the service request in the converted format from the converting unit 303, forward the service request in the converted format to the target service or the target service interface.

Further, the obtaining unit 301 is further adapted to: receive a service request response sent by the target service or the target service interface and send the service request response to the service requester; and further, the obtaining unit is further adapted to: convert a format of the service request response according to the rule of conversion between the service and the invoked service or the invoked service interface, and send the converted service request response to the service requester.

In the service configuration apparatus provided in the embodiment of the present invention, an obtaining unit parses a received service request to obtain a service identifier; and then a determining unit determines, according to a mapping relationship between the service identifier and an invoked service or a relationship between the service identifier and an invoked service interface, a target service or a target service interface corresponding to the service identifier; a converting unit converts the request into a format of the target service or a format of the target service interface according to a rule of conversion between a service and the invoked service or the invoked service interface; and a forwarding unit forwards the service request in the converted format to the target service or the target service interface.

By contrast, in the prior art, when multiple services of different interface data types are invoked, the services need to be published and registered repeatedly, and the system needs to store and manage mass static information and dynamic information of the services, which leads to data redundancy and reduces system processing performance. However, in the solution provided in the embodiment of the present invention, the target service or the target service interface can be obtained directly according to the mapping relationship between the service and the invoked service or the invoked service interface; and the service request is converted into the format of the target service or the format of the target service interface according to the rule of conversion between the service and the invoked service or the invoked service interface, thereby reducing the number of times of publishing and registering the services, reducing redundant data in the system, and improving system processing performance.

This embodiment of the present invention provides a service configuration apparatus. The apparatus may be a service router. As shown in FIG. 3, the apparatus includes an obtaining unit 301, a determining unit 302, a converting unit 303, and a forwarding unit 304.

The obtaining unit 301 is adapted to: parse a received service interface request to obtain a service interface identifier, and send the service interface identifier to the determining unit 302.

Specifically, the obtaining unit 301 is adapted to: receive a sent service interface request, obtain a service interface address included in the request, parse the service interface address to obtain the service interface identifier, and send the service interface identifier to the determining unit 302.

The determining unit 302 is adapted to: after receiving the service interface identifier sent by the obtaining unit 301, determine, according to a mapping relationship between the service interface identifier and an invoked service or a relationship between the service identifier and an invoked service interface, a target service or a target service interface corresponding to the service interface identifier, and send the determined target service or target service interface corresponding to the service interface identifier to the converting unit 303.

The converting unit 303 is adapted to: after receiving the target service or target service interface sent by the determining unit 302, convert a format of the service interface request into a format of the target service interface according to a rule of conversion between a service interface and the invoked service or the invoked service interface, and send the service interface request in the converted format to the forwarding unit 304. The forwarding unit 304 is adapted to: after receiving the service interface request in the converted format from the converting unit 303, forward the service interface request in the converted format to the target service or the target service interface.

Further, the obtaining unit 301 is adapted to: receive a service interface request response sent by the target service or the target service interface, and send the service interface request response to a service requester; and further, the obtaining unit 301 is further adapted to: convert a format of the service interface request response according to the rule of conversion between the service interface and the invoked service or the invoked service interface, and send the converted service interface request response to the service requester.

It should be noted that, in the two apparatus embodiments of the present invention, the mapping relationship between the activated service interface and the invoked service or the invoked service interface may be further configured in the determining unit 302; or the mapping relationship between the service identifier and the invoked service or the invoked service interface is configured; and then the rule of conversion between the service and the invoked service or the invoked service interface is configured according to the mapping relationship.

The invoked service or the invoked service interface includes a target service to be invoked or a target service interface to be invoked; the service includes different service types, and the service, which includes different service types, has a unique service identifier in the system. The service type represents a service function and is used for service discovery and service correlation. Different types of interfaces encapsulated in the service can facilitate invocation of multiple services, reduce redundant data in the system, and improve system processing performance.

With the service configuration apparatus provided in the embodiment of the present invention, an obtaining unit obtains a service interface identifier by parsing a received service interface request; a determining unit determines a target service interface according to a mapping relationship between the service interface identifier and an invoked service or a relationship between the service identifier and an invoked service interface; a converting unit converts the service interface request into a format of the target service interface according to a rule of conversion between a service interface and the invoked service or the invoked service interface; and a forwarding unit forwards the service interface request in the converted format to the target service interface.

By contrast, in the prior art, a single API acts as a service to provide network services for the user; when multiple services of different interface data types are invoked, the services need to be published and registered repeatedly, and the system needs to store and manage mass static information and dynamic information of the services, which leads to data redundancy and reduces system processing performance. However, in the solution provided in the embodiments of the present invention, the target service or the target service interface is determined according to the mapping relationship between the service identifier or the service interface identifier and the invoked service or the invoked service interface; and the format of the service request is converted according to the rule of conversion between the service or the service interface and the invoked service or the invoked service interface, thereby reducing the number of times of publishing and registering the services, reducing redundant data in the system, and improving system processing performance.

### Embodiment 2

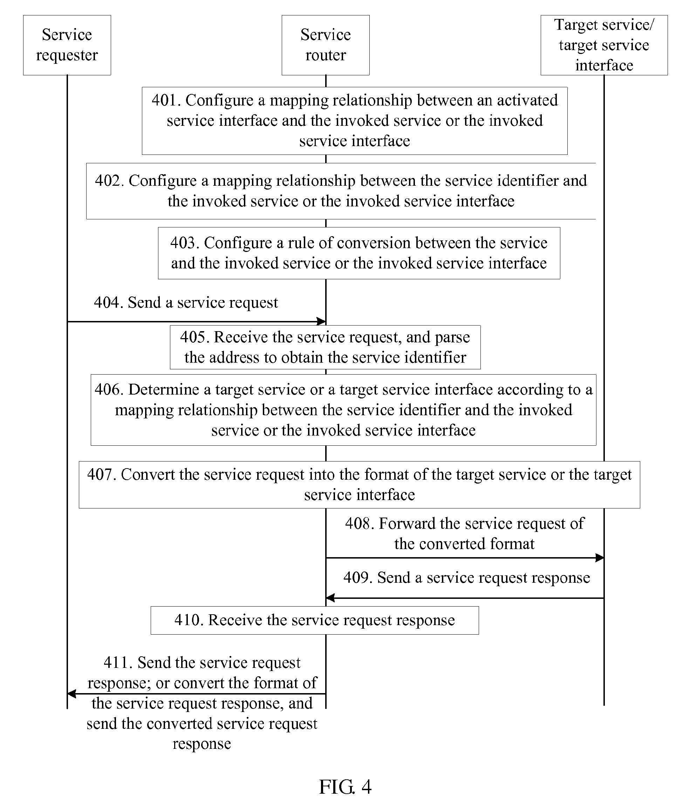

This embodiment of the present invention provides a service configuration method. As shown in FIG. 4, the method includes:

Step 401: A service router configures a mapping relationship between an activated service interface and an invoked service or a relationship between the service identifier and an invoked service interface. The invoked service or the invoked service interface includes a target service to be invoked or a target service interface to be invoked.

A service router includes a service routing function entity (Service Routing Function Entity), a service publication & discovery function entity (Service Publication & Discovery Function Entity), and a service routing register function entity (Service Routing Register Function Entity). In practical application, the three function entities may be integrated in one physical entity to provide the foregoing functions. In the present invention, the physical entity integrated of the three function entities is called a "service router".

The service routing function entity is the most important function entity in a service overlay network, and is a basis for implementing networked interaction between services. A basic function of the service routing function entity is to forward an interaction message between services to a proper next-hop service routing function entity or a destination service endpoint according to static information and dynamic information of the service as well as a configured routing rule. Due to diversity and complexity of services, the simple routing and forwarding function of the service routing function entity is no longer enough to meet user requirements and implement correct invocation of complex services. While supporting the simple routing, the service routing function entity can implement more functions, for example, according to a conversion rule, convert a format of a service request sent by a service requester into a format of an invoked target service or a format of an invoked target service interface between services, or convert a format of a response of the invoked target service or the invoked target service interface into the format of the service request, and then send the service request or response after format converted to the service requester.

The service publication and discovery function entity is a function entity for handling service publication, service discovery, and service subscription, and for storing static information of the service. The static information of the service includes an interface, provider information, a service category, a service name, a service type, and so on.

The service routing register function entity is adapted to maintain dynamic information of the service. The dynamic information of the service includes a logical address of the service, a real IP address and a port number of the service, a service roaming status, service tariff, service performance, and so on.

Further, the service includes different service types. The service, which includes different service types, has a unique service identifier in the system. The system refers to an application system that provides a service configuration method disclosed in the embodiment of the present invention, and that performs routing according to the service configuration method. The service type represents a service function, and is used for service discovery and service correlation.

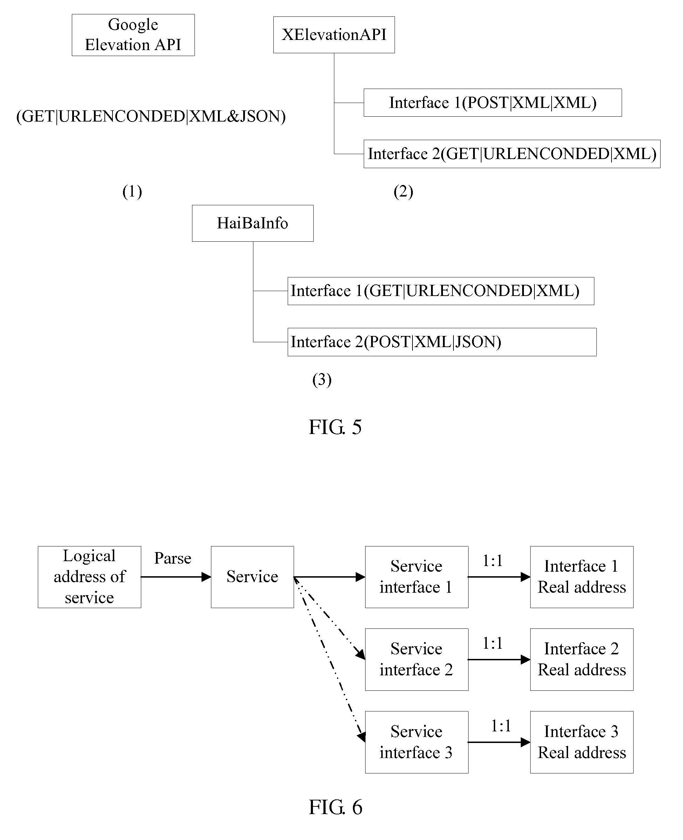

For example, the 3 accompanying drawings in FIG. 5 show services and service interfaces involved in the entire process of service requesting and service responding. As shown in FIG. 5 (1), Google publishes and registers a Google Elevation Map service in the network. Specifically, the Google Elevation Map service is an invoked service in the embodiment of the present invention. In GETIURLENCONDEDIXML&JSON, GET means that the service supports a GET method as an HTTP request, and, after a service request is processed, a returned service request response supports an XML format or a JSON format; URLENCONDED means that data is encoded through a URL (Uniform/Universal Resource Locator, uniform resource locator), that is, the URL carries a parameter, and the data returned through a parameter identifier is in an XML format or a JSON format.

Google Elevation API example 1: Taking the elevation of Denver, Colorado, as an example, the response is in a JSON format:
http://maps.google.com/maps/api/elevation/json?locations=39.7391536,-104.9847034 &sensor=false

A returned service request response is:

```
           {
            "status": "OK",
            "results": [ {
              "location": {
                "lat": 39.7391536,
                "Ing": -104.9847034
              },
           "elevation": 1608.8402100
            } ]
           }
```

Google Elevation API example 2: Taking the elevation of Denver, Colorado, as an example, the response is in an XML format:
http://maps.google.com/maps/api/elevation/xml?locations=39.7391536,-104.9847034 &sensor=false

A returned service request response is:

```
          <ElevationResponse>
            <status>OK</status>
            <result>
                <location>
                    <lat>39.7391536</lat>
                    <lng>-104.9847034</lng>
                </location>
                <elevation> 1608.8402100</elevation>
            </result>
          </ElevationResponse>
```

As shown in FIG. 5 (2), in the network, vendor X publishes and registers a service of obtaining an elevation of a location, where the name of the service is "XElevationAPI". Specifically, the XElevationAPI service is an invoked service interface in the embodiment of the present invention, and the interfaces encapsulated for this service are interface 1 and interface 2, and the following two types of interfaces are supported:

Interface 1 (POST|XML|XML): This interface supports a POST method for an HTTP request. The data in the request is in an XML format, and the response data is in an XML format. Specifically, an example of XElevationAPI interface 1 is given below:
POST http:// 10.70.109.94:8080/XElevationAPI HTTP/1.1
Accept-Encoding: gzip,deflate
Content-Type: text/xml;charset=UTF-8
User-Agent: Jakarta Commons-HttpClient/3.1
Content-Length: 90

```
          <locations>
                  <loc>
                    <la>39.7391536</la>
                    <lo>-104.9847034</lo>
                  </loc>
          </locations>
```

A returned service interface request response is:

```
          <info>
          <result>
                   <location>
                     <lat>39.7391536</lat>
                     <lng>-104.9847034</lng>
                  </location>
                  <elevation>1608.8402100</elevation>
                </result>
          </info>
```

Interface 2 (GETIURLENCONDEDIXML): This interface supports a GET method as an HTTP request, and the request supports URLENCONDED, that is, the URL carries a parameter. The response supports an XML format. Specifically, an example of the XElevationAPI interface is given below:
http://10.70.109.94:8080/XElevationAPI?latitude=39.7391536&longitude=-104.9847 034

Returned service interface request response:
<elevation>1608.8402100</elevation>

As shown in FIG. 5 (3), developer A develops a service of obtaining elevation information of a user location, where the name of the service is "HaiBaInfo". The HaiBaInfo service is a service requested by a requester in the embodiment of the present invention. The service requires inputting one parameter. The name of the parameter is "loc", and its value is information of the location whose elevation is queried by the user, and its format is expressed as an altitude and a longitude of the location, such as 39.7391536, -104.9847034. Two interfaces, interface 1 and interface 2, are encapsulated under this service, and the service supports the following two types of interfaces:

Interface 1 (GETIURLENCONDEDIXML): This interface supports a GET method as an HTTP request, and the request supports URLENCONDED, that is, the URL carries a parameter. The data format of a service response is XML. Specifically, an example of the HaiBaInfo service interface is given below:
http://10.70.109.94:8080/HaiBaInfo?la=39.7391536&lo=-104.9847034

Returned service interface request response:
<haiba>1608.8402100</haiba>

Interface 2 (POST|XML|JSON): This interface supports a POST method for an HTTP request. The data format of the request is XML, and the data format of a service response is JSON. Specifically, an example of the HaiBaInfo service interface is given below:

```
          POST http:// 10.70.109.94:8080/HaiBaInfo HTTP/1.1
          Accept-Encoding: gzip,deflate
          Content-Type: text/xml;charset=UTF-8
          User-Agent: Jakarta Commons-HttpClient/3.1
          Content-Length: 90
          <location>
          <la>39.7391536</la>
                  <lo>-104.9847034</lo>
          </location>
```

Returned service interface request response:

```
           {
                  "location": {
           "lat": 39.7391536,
                      "Ing": -104.9847034
                   },
           "elevation": 1608.8402100
           }
```

It should be noted that the system specifies a unique logical address for the service or the service interface. The configuration solution in step 301 is provided for a service that involves no mapping, that is, multiple service interfaces may be encapsulated under the service, and the service interfaces are activated, and then a mapping relationship is configured between the activated service interface and the invoked service or service interface. The invoked service includes an invoked target service, and the invoked service interface includes an invoked target service interface. In this way, the invoked target service or target service interface can be determined directly according to the activated service interface. For example, as shown in FIG. 6, a one-to-one corresponding relationship is configured between the real address and service interface 1, service interface 2 and service interface 3 encapsulated under the service, and a service mapping interface is set. Specifically, in FIG. 6, the logical address of the service is parsed to obtain a service identifier; service interface 1, service interface 2, and service interface 3 are service interfaces encapsulated for the service; and then a one-to-one corresponding relationship is set between service interface 1 and the real address of service interface 1, a one-to-one corresponding relationship is set between service interface 2 and the real address of service interface 2, and a one-to-one corresponding relationship is set between service interface 3 and the real address of service interface 3. Here, the interface mapped to the service refers to the interface that provides the service when the service is invoked, and the real address is a target service or a target service interface.

For example, interface 1 under a HaiBainfo service may be activated, and a mapping relationship is configured between interface 1 under the HaiBainfo service and the Google Elevation Map service, or a mapping relationship is configured between interface 1 under the HaiBainfo service and an interface under the Google Elevation Map service.

Step 402: The service router configures a mapping relationship between the service identifier and the invoked service or the invoked service interface.

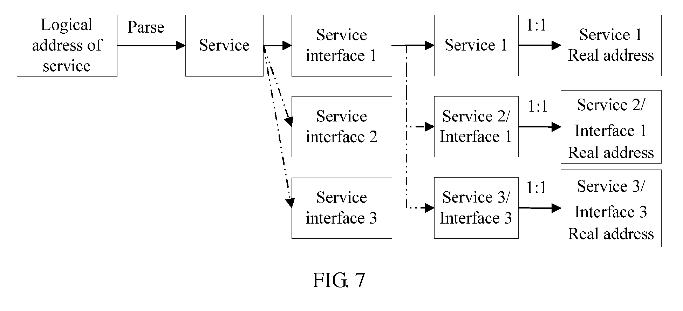

It should be noted that the configuration solution in step 402 is provided for a service that involves implementation of mapping. For example, as shown in FIG. 7, the logical address of the service is parsed to obtain a service identifier, and the service interfaces encapsulated under the service are service interface 1, service interface 2, and service interface 3; and a mapping relationship is configured between the service interface and the invoked service or the invoked service interface. Specifically, as shown in FIG. 6, a mapping relationship is configured between service interface 1 and service 1 invoked by the service interface 1, and the real address of service 1 is determined according to a one-to-one corresponding relationship between the invoked service 1 and the real address of service 1. Alternatively, a mapping relationship is configured between service interface 1 and interface 1 in service 2 invoked by the service interface 1, and the real address of interface 1 in the invoked service 2 is determined according to a one-to-one corresponding relationship between interface 1 in the invoked service 2 and the real address of interface 1 in the invoked service 2. Alternatively, a mapping relationship is configured between service interface 1 and interface 3 in service 3 invoked by the service interface 1, and the real address of interface 3 in the invoked service 3 is determined according to a one-to-one corresponding relationship between interface 3 in the invoked service 3 and the real address of interface 3 in the invoked service 3.

For example, a mapping relationship may be configured between a HaiBainfo service and an XElevationAPI service, or a mapping relationship may be configured between the HaiBainfo service and an interface (interface 1 or interface 2) under the XElevationAPI service.

It should be noted that step 401 and step 402 may not be performed in a fixed sequence. To be specific, step 401 may be performed before step 402, or step 402 may be performed before step 401.

Step 403: Configure a rule of conversion between the service and the invoked service or service interface according to the mapping relationship configured in step 402.

Step 403 is intended to convert the data format of the requested service into the data format of the invoked service or service interface. The data formats supported by the service may be: the XML format, the JSON format, or a plain text format. Specifically, taking the HaiBaInfo service and the Google Elevation API service as an example, the configuration of the conversion rule of the service request of the HaibaInfo service and the Google Elevation Map (xml) service is described below:

1. Obtain a URL address of the Google Elevation Map (xml) service: http://maps.google.com/maps/api/elevation/xml?locations=39.7391536,-104.9847034&sensor=f alse.

2. Extract values of parameters la and lo out of the HaiBaInfo service request, and use the character "," as a link to generate a string "39.7391536,-104.9847034". Assign the generated string as a value to the parameter "location" of the GoogleElevationAPI service request.

The configuration of the conversion rule of the service response of the HaibaInfo service and the Google Elevation Map (xml) service is described below:

Extract a value of an element <elevation> out of the service response of the Google Elevation Map (xml) service, and assign the value to <haibai> in the service response of the HaiBaInfo service.

With respect to the foregoing rule in specific implementation, each service interface may be described in an XML format first, and then the service request is converted according to a conversion rule. The conversion rule can express any syntax format recognizable by any machine. For example, the conversion rule may be in an xml or xslt file format. For example, in configuring the conversion rule of a service request of a HaibaInfo service and a Google Elevation Map (xml) service, the HaiBaInfo service request is expressed in an XML format as follows:

```
          <HaiBaiInfo>
          <la>?</la>
          <lo>?</lo>
          </HaiBaiInfo>
```

The GoogleElevationAPI service request is expressed in the XML format as follows:

```
          <GoogleElevationAPI>
          <locations>?</locations>
          </GoogleElevationAPI>
```

The conversion rule of the service request is expressed in an XSLT format as follows:

```
          <?xml version="1.0" encoding="UTF-8"?>
          <xsl:stylesheet version=
           "1.0" xmlns:xsl="http://www.w3.org/1999/XSL/Transform" >
             <xsl:output method= "xml"/>
             <xsl:variable name="spliter1">
                <xsl:value-of select="/HaiBaiInfo/la"/>
             </xsl:variable>
             <xsl:variable name=" spliter">
                <xsl:value-of select="/HaiBaiInfo/lo"/>
             </xsl:variable>
             <xsl:template match="/">
               <GoogleElevationAPI>
                   <locations>
                     <xsl:value-of select="concat($spliter1,',',$spliter)"/>
                   </locations>
               </GoogleElevationAPI>
             </xsl:template>
          </xsl: stylesheet>
```

Step 404: The service requester sends a service request to the service router, where the service request includes a service address.

Specifically, the system specifies a unique logical address for the service or the service interface. For example, a logical address assigned by the network to the service is: http://10.70.109.94:8080/HaiBaInfo.

Step 405: The service router receives the service request sent by the service requester, and parses the service address included in the service request to obtain a service identifier.

For example, http://10.70.109.94:8080/HaiBaInfo is parsed to obtain a service identifier HaiBaInfo.

Step 406: The service router determines, according to the mapping relationship between the service identifier and the invoked service or the invoked service interface, a target service or a target service interface corresponding to the service identifier.

Further, the determining a target service or a target service interface in step 406 may include:
determining, according to the service identifier, an activated service interface of a service corresponding to the service identifier; and determining, according to the mapping relationship between the activated service interface and the invoked service or the invoked service interface, the target service or the target service interface corresponding to the service identifier.

Specifically, the activated service interface of the current service can be determined according to the service identifier and a set activation status of the interface corresponding to the service. For example, among the service interfaces mapped to HaibaInfo, interface 1 may be set to an activated status and interface 2 may be set to a deactivated status according to user requirements on the interface data type.

It should be noted that when the service types and the data formats vary between services, in the implementation of service mapping in the prior art, multiple interfaces belonging to the same service need to be published and/or registered as in charge of multiple services, the services need to be published and registered repeatedly, and the system needs to store and manage mass static information and dynamic information of the services, which leads to data redundancy and reduces system processing performance. Moreover, the implementation of the service routing and invocation lacks flexibility. However, in the solution provided in the embodiment of the present invention, different types of interfaces are encapsulated under the service, and the invocation is performed directly according to the mapping relationship between the interfaces, thereby reducing redundant data in the system, improving system processing performance, and making it flexible to implement the service routing and invocation.

Further, the target service or the target service interface may be determined in any one of the following manners:
determining, according to a rule configured for selecting a target service or a target service interface and according to the service identifier, the target service or the target service interface corresponding to the service identifier, where
the selection rule may be: selecting a specific service in a specific circumstance, for example, selecting target service 1 when the value of parameter 1 in the service request is 1, and selecting target service 2 when the value of parameter 1 is 2; in specific implementation, the rule may be expressed in the xml format or in any syntax format recognizable by any machine; or
determining, according to an arrangement order and availability of the target service or the target service interface and according to the service identifier, the target service or the target service interface corresponding to the service identifier.

The arrangement order may be an order of saving the mapping relationship between the service and the target service or the target service interface in the system, and specifically, the target service or the target service interface may be invoked according to a saved order in the system.

When the target service or the target service interface is determined according to the availability of the target service or the target service interface, the target service or the target service interface may be invoked according to a saved order the mapping relationship between the service and the target service or the target service interface in the system. If the currently selected target service or target service interface is unavailable, a next target service or target service interface is selected sequentially.

Step 407: Convert a format of the service request into a format of the target service or a format of the target service interface according to a rule of conversion between a service and the invoked service or the invoked service interface.

The data format of the service request is converted into the data format of the target service or the target service interface. Specifically, for details, reference may be made to the description in step 403, and no repeated description is given here any further.

For example, the service router determines to invoke the XElevationAPI service according to the mapping relationship of the HaiBaInfo service. Specifically, the service router determines a target service or a target service interface according to a rule configured for selecting a target service or a target service interface or according to an arrangement order and availability of the target service or the target service interface. For details, reference may be made to the manner of determining the target service or the target service interface in step 406, and no repeated description is given here any further. Afterward, according to the conversion rule, the data format of the service request sent by the service requester is converted into an XElevationAPI format.

Step 408: Forward the service request in the converted format to the target service or the target service interface.

For example, the service router forwards the service request in the converted format to the XElevationAPI service; or the service router forwards the service request in the converted format to the XElevationAPI service interface.

Step 409: The target service or the target service interface performs processing according to the received service request in the converted format, which is sent by the service router; and sends a service request response to the service router.

Specifically, in this step, a processor of the target service or the target service interface may perform processing.

Step 410: The service router receives the service request response sent by the target service or the target service interface.

For example, the service router receives a service request response returned by the XElevationAPI.

Step 411: Send the service request response to the service requester; or, convert a format of the service request response according to the rule of conversion between the service and the invoked service or the invoked service interface, and send the converted service request response to the service requester.

If the format of the service request response is the same as the response format of the service requested by the user, the response may be sent to the service requester directly. For example, the format of the service request response returned by the XElevationAPI is XML and the response format of the HaiBaInfo service is XML, and in this case, the response is sent to the service requester directly.

If the format of the service request response is different from the response format of the service requested by the service requester, the format of the request response needs to be converted according to a conversion rule into the response format of the service requested by the user. For example, the format of the service request response returned by the XElevationAPI is JSON but the response format of the HaiBaInfo service is XML, and in this case, the response format JSON needs to be converted according to a conversion rule into the response format XML of the service requested by the service requester.

Upon receiving the response, the user obtains the content that needs to be queried.

With the service configuration method provided in the embodiment of the present invention, different types of interfaces are encapsulated for the service in the network, so that the configuration of the service mapping relationship in the network is optimized to support requests and responses in different formats. By contrast, in the prior art, when multiple services of different interface data types are invoked, the services need to be published and registered repeatedly, and the system needs to store and manage mass static information and dynamic information of the services, which leads to data redundancy and reduces system processing performance. However, in the solution provided in the embodiment of the present invention, different types of interfaces are encapsulated in the service, and the target service or the target service interface is determined according to the mapping relationship between the service identifier or the service interface identifier and the invoked service or the invoked service interface; and the format of the service request is converted according to the rule of conversion between the service or the service interface and the invoked service or the invoked service interface, thereby reducing the number of times of publishing and registering the services, reducing redundant data in the system, and improving system processing performance.

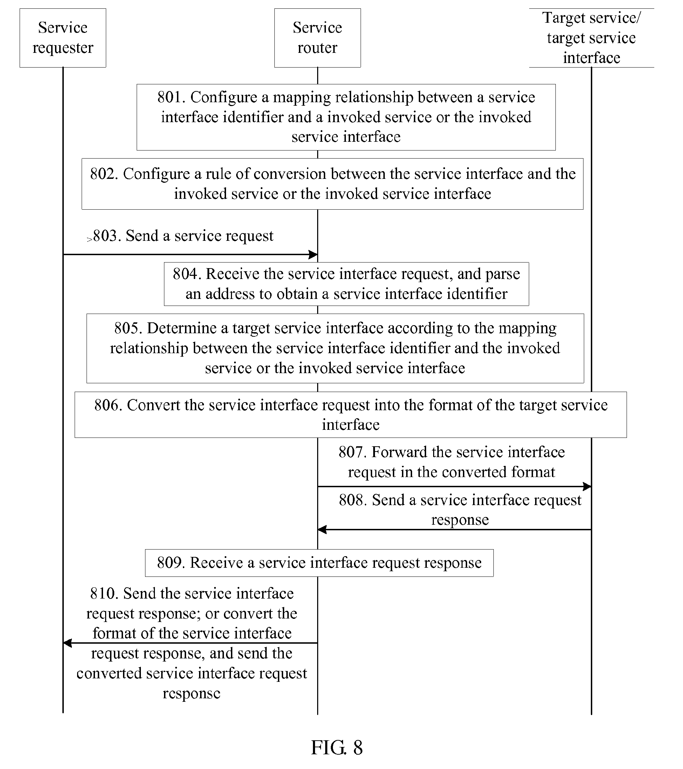

This embodiment of the present invention provides a service configuration method. As shown in FIG. 8, the method includes:

Step 801: A service router configures a mapping relationship between a service interface identifier and an invoked service or a relationship between the service identifier and an invoked service interface, where the invoked service or the invoked service interface includes a target service to be invoked or a target service interface to be invoked.

A service interface corresponding to the service interface identifier includes different service interface types. The service interface, which includes different service interface types, has a unique service interface identifier in the service. The service interface identifier specifies a service interface type and a parameter structure, and the service interface type includes the method of requesting and the method of responding in the service, and the data type.

For example, the 3 accompanying drawings in FIG. 5 show service interfaces involved in the entire process of service requesting and service responding. For details, refer to the description in step 401 in Embodiment 2, and no repeated description is given here any further.

For example, a mapping relationship may be configured between interface 1 encapsulated under a HaiBainfo service and an XElevationAPI service, or a mapping relationship may be configured between interface 1 encapsulated under the HaiBainfo service and interface 1 under the XElevationAPI service.

Step 802: Configure a rule of conversion between the service interface and the invoked service or the invoked service interface.

The conversion rule is used to express a parameter mapping relationship between the service interface and the invoked service or service interface. For example, if both the service interface and the invoked service or service interface support the HTTP protocol, the conversion rule expresses a mapping relationship of HTTP methods, HTTP header parameters, and HTTP message body parameters between the two. The conversion rule can express a syntax format recognizable by any machine. For example, the conversion rule may be in an xml file format or an xslt file format.

Step 803: A service requester sends a service interface request to the service router, where the service interface request includes a service interface address.

Specifically, the system specifies a unique logical address for the service or the service interface. For example, a logical address assigned by the network to the service is: http://10.70.109.94:8080/HaiBaInfo.

Step 804: The service router receives the service interface request sent by the service requester, and parses the service interface address included in the service interface request to obtain a service interface identifier.

For example, http://10.70.109.94:8080/HaiBaInfo is parsed to obtain a service identifier HaiBaInfo.

Step 805: Determine a target service interface according to the mapping relationship between the service interface identifier and the invoked service or the invoked service interface.

Specifically, if the request is a service interface request, the target service or the target service interface corresponding to the service interface identifier is determined according to the service interface identifier and a mapping relationship between the service interface and the invoked service or the invoked service interface.

It should be noted that when the service types and the data formats vary between services, in the implementation of service mapping in the prior art, multiple interfaces belonging to the same service need to be published and/or registered as in charge of multiple services, the services need to be published and registered repeatedly, and the system needs to store and manage mass static information and dynamic information of the services, which leads to data redundancy and reduces system processing performance. Moreover, the implementation of the service routing and invocation lacks flexibility. However, in the solution provided in the embodiment of the present invention, different types of interfaces are encapsulated under the service, and the invocation is performed directly according to the mapping relationship between the interfaces, thereby reducing redundant data in the system, improving system processing performance, and making it flexible to implement the service routing and invocation.

Further, the target service or the target service interface may be determined in any one of the following manners:
determining, according to a rule configured for selecting a target service or a target service interface and according to the service identifier, the target service or the target service interface corresponding to the service interface identifier, where
the selection rule may be: selecting a specific service in a specific circumstance, for example, selecting target service 1 when the value of parameter 1 in the service request is 1, and selecting target service 2 when the value of parameter 1 is 2; in specific implementation, the rule may be expressed in an xml format or in any syntax format recognizable by any machine; or
determining, according to an arrangement order and availability of the target service or the target service interface and according to the service identifier, the target service or the target service interface corresponding to the service interface identifier.

The arrangement order may be an order of saving the mapping relationship between the service and the target service or the target service interface in the system, and specifically, the target service or the target service interface may be invoked according to a saved order in the system.

When the target service or the target service interface is determined according to the availability of the target service or the target service interface, the target service or the target service interface may be invoked according to a saved order the mapping relationship between the service and the target service or the target service interface in the system. If the currently selected target service or target service interface is unavailable, a next target service or target service interface is selected sequentially.

Step 806: Convert a format of the service interface request into a format of the target service interface according to a rule of conversion between a service interface corresponding to the service interface identifier and the invoked service or the invoked service interface.

Specifically, the data format of the service interface request is converted into the data format of the target service or the target service interface. For example, the service router determines to invoke interface 1 under an XElevationAPI service according to the mapping relationship between interface 1 encapsulated under the HaiBaInfo service and interface 1 under the XElevationAPI service. Specifically, the service router determines the target service or the target service interface corresponding to the service interface identifier according to the rule configured for selecting the target service or the target service interface or according to the arrangement order and the availability of the target service or the target service interface, and then converts, according to the conversion rule, the data format of the service request sent by the user into the format of interface 1 under the XElevationAPI service.

Step 807: Forward the service interface request in the converted format to the target service or the target service interface.

For example, the service router forwards the service interface request in the converted format to the XElevationAPI service; or the service router forwards the service interface request in the converted format to the XElevationAPI service interface.

Step 808: The target service or the target service interface performs processing according to the received service interface request in the converted format, and sends a service interface request response to the service router.

Step 809: The service router receives the service request response sent by the target service or the target service interface.

For example, the service router receives a service request response returned by the XElevationAPI.

Step 810: Send the service interface request response to the service requester; or, convert a format of the service interface request response according to the rule of conversion between the service interface and the invoked service or the invoked service interface, and send the converted service interface request response to the service requester.

Upon receiving the response, the user can obtain the content that needs to be queried.

By contrast with the service configuration method provided in the embodiment of the present invention, in the prior art, when multiple services of different interface data types are invoked, the services need to be published and registered repeatedly, and the system needs to store and manage mass static information and dynamic information of the services, which leads to data redundancy and reduces system processing performance. However, in the solution provided in the embodiment of the present invention, different types of interfaces are encapsulated in the service, and the target service or the target service interface is determined according to the mapping relationship between the service identifier or the service interface identifier and the invoked service or the invoked service interface; and the format of the service request is converted according to the rule of conversion between the service or the service interface and the invoked service or the invoked service interface, thereby reducing the number of times of publishing and registering the services, reducing redundant data in the system, and improving system processing performance.

For the specific implementation process of each step in this embodiment, reference may be made to the description about the embodiment shown in FIG. 4. The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A service configuration method, comprising:
parsing a received service request to obtain a service identifier;
determining, according to a mapping relationship between the service identifier and an invoked service or a relationship between the service identifier and an invoked service interface, a target service or a target service interface corresponding to the service identifier;
converting a format of the service request into a format of the target service or a format of the target service interface according to a rule of conversion between a service and the invoked service or the invoked service interface; and
forwarding the service request in the converted format to the target service or the target service interface.

2. The service configuration method according to claim 1, wherein the parsing a received service request to obtain a service identifier comprises:
receiving the sent service request, wherein the request comprises a service address; and
parsing the service address to obtain the service identifier.

3. The service configuration method according to claim 1 or 2, wherein the determining, according to a mapping relationship between the service identifier and an invoked service or a relationship between the service identifier and an invoked service interface, a target service or a target service interface corresponding to the service identifier comprises:
determining, according to the service identifier, an activated service interface of a service corresponding to the service identifier; and determining, according to the mapping relationship between the activated service interface and the invoked service or the invoked service interface, the target service or the target service interface corresponding to the service identifier.

4. The service configuration method according to claim 3, wherein the determining the target service or the target service interface corresponding to the service identifier comprises:
determining, according to a rule configured for selecting a target service or a target service interface, the target service or the target service interface corresponding to the service identifier; or
determining, according to an arrangement order and availability of the target service or the target service interface, the target service or the target service interface corresponding to the service identifier.

5. The service configuration method according to claim 1, wherein before the parsing a received service request to obtain a service identifier, the method further comprises:
configuring a mapping relationship between an activated service interface and the invoked service or the invoked service interface; or configuring the mapping relationship between the service identifier and the invoked service or the invoked service interface; and
configuring the rule of conversion between the service and the invoked service or the invoked service interface according to the configured mapping relationship between the activated service interface and the invoked service or the invoked service interface, or the configured mapping relationship between the service identifier and the invoked service or the invoked service interface.

6. The service configuration method according to claim 1, 4, or 5, wherein:
the service comprises different types of service interfaces, the service has a unique service identifier in a system, and the service interface has a unique service interface identifier in the service.

7. The service configuration method according to claim 1, wherein after the forwarding the service request to the target service or the target service interface, the method further comprises:
receiving a service request response sent by the target service or the target service interface; and
sending the service request response to a service requester; or, converting a format of the service request response according to the rule of conversion between the service and the invoked service or the invoked service interface, and sending the service request response in the converted format to a service requester.

8. A service configuration method, comprising:
parsing a received service interface request to obtain a service interface identifier;
determining, according to a mapping relationship between the service interface identifier and an invoked service or a relationship between the service identifier and an invoked service interface, a target service or a target service interface corresponding to the service interface identifier;
converting a format of the service interface request into a format of the target service or a format of the target service interface according to a rule of conversion between a service interface and the invoked service or the invoked service interface; and
forwarding the service interface request in the converted format to the target service or the target service interface.

9. The service configuration method according to claim 8, wherein the parsing a received service interface request to obtain a service interface identifier comprises:
receiving a sent service interface request, wherein the request comprises a service interface address; and
parsing the service interface address to obtain the service interface identifier.

10. The service configuration method according to claim 9, wherein the determining the target service or the target service interface comprises:
determining, according to a rule configured for selecting a target service or a target service interface, the target service or the target service interface corresponding to the service interface identifier; or
determining, according to an arrangement order and availability of the target service or the target service interface, the target service or the target service interface corresponding to the service interface identifier.

11. The service configuration method according to claim 8, wherein before the parsing a received service interface request to obtain a service interface identifier, the method further comprises:
configuring a mapping relationship between the service interface identifier and the invoked service or the invoked service interface; and
configuring the rule of conversion between the service interface and the invoked service or the invoked service interface according to the configured mapping relationship between the service interface identifier and the invoked service or the invoked service interface.

12. The service configuration method according to claim 8, wherein after the forwarding the request to the target service interface, the method further comprises:
receiving a service interface request response sent by the target service or the target service interface; and
sending the service interface request response to a service requester; or, converting a format of the service interface request response according to the rule of conversion between the service interface and the invoked service or the invoked service interface, and sending the converted service interface request response to a service requester.

13. A service configuration apparatus, comprising:
an obtaining unit, adapted to: parse a received service request to obtain a service identifier, and send the service identifier to a determining unit;
the determining unit, adapted to: after receiving the service identifier sent by the obtaining unit, determine, according to a mapping relationship between the service identifier and an invoked service or a relationship between the service identifier and an invoked service interface, a target service or a target service interface corresponding to the service identifier, and send the determined target service or target service interface corresponding to the service identifier to a converting unit;
the converting unit, adapted to: after receiving the target service or target service interface sent by the determining unit, convert a format of the service request into a format of the target service or a format of the target service interface according to a rule of conversion between a service and the invoked service or the invoked service interface, and send the service request in the converted format to a forwarding unit; and
the forwarding unit, adapted to: after receiving the service request in the converted format from the converting unit, forward the service request in the converted format to the target service or the target service interface.

14. The service configuration apparatus according to claim 13, wherein the obtaining unit is further adapted to:
receive a sent service request, obtain a service address comprised in the service request, and parse the service address to obtain the service identifier.

15. The service configuration apparatus according to claim 13 or 14, wherein the determining unit is further adapted to:
determine, according to the service identifier, an activated service interface of a service corresponding to the service identifier; and determine, according to a mapping relationship between the activated service interface and the invoked service or the invoked service interface, the target service or the target service interface corresponding to the service identifier.

16. The service configuration apparatus according to claim 15, wherein the determining unit is further adapted to: determine, according to a rule configured for selecting a target service or a target service interface, the target service or the target service interface corresponding to the service identifier; or
determine, according to an arrangement order and availability of the target service or the target service interface, the target service or the target service interface corresponding to the service identifier.

17. The service configuration apparatus according to claim 13, wherein the determining unit is further adapted to: configure a mapping relationship between an activated service interface and the invoked service or the invoked service interface; or configure the mapping relationship between the service identifier and the invoked service or the invoked service interface; and
the determining unit is further adapted to configure the rule of conversion between the service and the invoked service or the invoked service interface according to the configured mapping relationship between the activated service interface and the invoked service or the invoked service interface, or the configured mapping relationship between the service identifier and the invoked service or the invoked service interface.

18. The service configuration apparatus according to claim 13, wherein the forwarding unit is further adapted to:
receive a service request response sent by the target service or the target service interface and send the service request response to a service requester; or receive a service request response sent by the target service or the target service interface, and convert a format of the service request response according to the rule of conversion between the service and the invoked service or the invoked service interface, and send the service request response in the converted format to a service requester.

19. A service configuration apparatus, comprising:
an obtaining unit, adapted to: parse a received service interface request to obtain a service interface identifier, and send the service interface identifier to a determining unit;
the determining unit, adapted to: after receiving the service interface identifier sent by the obtaining unit, determine, according to a mapping relationship between the service interface identifier and an invoked service or a relationship between the service identifier and an invoked service interface, a target service or a target service interface corresponding to the service interface identifier, and send the determined target service or target service interface corresponding to the service interface identifier to a converting unit;
the converting unit, adapted to: after receiving the target service or target service interface sent by the determining unit, convert a format of the service interface request into a format of the target service interface according to a rule of conversion between a service interface and the invoked service or the invoked service interface, and send the service interface request in the converted format to a forwarding unit; and
the forwarding unit, adapted to: after receiving the service interface request in the converted format from the converting unit, forward the service interface request in the converted format to the target service or the target service interface.

20. The service configuration apparatus according to claim 19, wherein the obtaining unit is further adapted to:
receive a sent service interface request, obtain a service interface address comprised in the service interface request, and parse the service interface address to obtain the service interface identifier.

21. The service configuration apparatus according to claim 20, wherein the determining unit is further adapted to: determine, according to a rule configured for selecting a target service or a target service interface, the target service or the target service interface corresponding to the service interface identifier; or
determine, according to an arrangement order and availability of the target service or the target service interface, the target service or the target service interface corresponding to the service interface identifier.

22. The service configuration apparatus according to claim 19, wherein the determining unit is further adapted to: configure a mapping relationship between the service interface identifier and the invoked service or the invoked service interface; and
configure the rule of conversion between the service interface and the invoked service or the invoked service interface according to the configured mapping relationship between the service interface identifier and the invoked service or the invoked service interface.

23. The service configuration apparatus according to claim 19, wherein the forwarding unit is further adapted to: receive a service interface request response sent by the target service or the target service interface, and send the service interface request response to a service requester; or
the forwarding unit is further adapted to: receive a service interface request response sent by the target service or the target service interface, convert a format of the service interface request response according to the rule of conversion between the service interface and the invoked service or the invoked service interface, and send the service interface request response in the converted format to a service requester.
